(19) Europäisches Patentamt
European Patent Office
Office européen des brevets

(11) EP 2 270 104 A1

(12) EUROPEAN PATENT APPLICATION
published in accordance with Art. 153(4) EPC

(43) Date of publication:
**05.01.2011 Bulletin 2011/01**

(21) Application number: **09724005.5**

(22) Date of filing: **26.03.2009**

(51) Int Cl.:
***C08L 101/02*** (2006.01) ***C08G 61/06*** (2006.01)
***C08J 5/22*** (2006.01) ***H01B 1/06*** (2006.01)
***H01M 4/86*** (2006.01) ***H01M 8/02*** (2006.01)
***H01M 8/10*** (2006.01)

(86) International application number:
**PCT/JP2009/056849**

(87) International publication number:
**WO 2009/119903 (01.10.2009 Gazette 2009/40)**

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(30) Priority: **27.03.2008 JP 2008083299**

(71) Applicant: **Sumitomo Chemical Company, Limited**
**Tokyo 104-8260 (JP)**

(72) Inventors:
- **YOSHIMURA, Ken**
**Tsukuba-shi**
**Ibaraki 305-0821 (JP)**
- **YANAGAWA, Masao**
**Toyonaka-shi**
**Osaka 560-0021 (JP)**

(74) Representative: **Hart-Davis, Jason et al**
**Cabinet Beau de Loménie**
**158, rue de l'Université**
**75340 Paris Cedex 07 (FR)**

# (54) POLYMER ELECTROLYTE COMPOSITION

(57) A polymer electrolyte composition comprising a component (A) and a component (B) described below, wherein if the equivalent weight of cation exchange groups in the component (A) is termed Ic, and the equivalent number of anion exchange groups in the component (B) is termed Ia, then the equivalent weight ratio represented by Ic/Ia is from 1 to 10,000.
(A) a cation exchange resin
(B) an anion exchange resin having a heterocyclic group containing a cationic nitrogen atom

EP 2 270 104 A1

## Description

### TECHNICAL FIELD

The present invention relates to a polymer electrolyte composition. More specifically, the present invention relates to a polymer electrolyte composition that is suitable for obtaining a member for a solid polymer fuel cell.

### BACKGROUND ART

Solid polymer fuel cells (hereinafter sometimes referred to as "fuel cells") are electric power generation devices that generate electrical power via a chemical reaction between hydrogen and oxygen, and hold great promise as a possible next generation energy source in fields such as the electrical equipment industry and the automotive industry. With respect to the polymer electrolyte membrane to be used for the diaphragm (fuel cell diaphragm) in these types of fuel cells, attention has recently been focused on polymer electrolyte membranes formed of hydrocarbon-based polymer electrolytes, which are inexpensive and exhibit excellent heat resistance, in place of polymer electrolyte membranes formed of conventional fluorine-based polymer electrolytes (see, for example, JP-2003-31232-A and JP-2003-113136-A).

When used in a fuel cell, a polymer electrolyte membrane is sandwiched between a separator, a gasket and a gas diffusion layer inside a fuel cell stack, and is held via application of a high surface when the amount of water absorbed by the polymer electrolyte membrane changes as the fuel cell is started and stopped, dimensional changes occur in the polymer electrolyte membrane occur due to hygroscopic swelling or drying shrinkage. These dimensional changes increase the likelihood of mechanical deterioration of the polymer electrolyte membrane. Moreover, upon extended operation involving repeated starting stooping of the fuel cell, the mechanical deterioration of the polymer electrolyte membrane becomes marked, and there is a danger that this may lead to membrane rupture and malfunction of the fuel cell. Accordingly, for a polymer electrolyte membrane to be used as a fuel cell diaphragm, one of the required properties is that the membrane does not suffer from mechanical deterioration as a result of dimensional changes caused by this type of swelling and shrinkage.

However, in a polymer electrolyte membrane to be used as a fuel cell diaphragm, if an attempt is made to modify the molecular structure of the polymer electrolyte used in the polymer electrolyte membrane in order to satisfactorily minimize dimensional changes caused by swelling and shrinkage, then properties required of the fuel cell diaphragm, such as proton conductivity, have tended to deteriorate.

### DISCLOSURE OF INTENTION

The present invention has been developed in light of these circumstances, and has objects of providing a polymer electrolyte membrane which has a proton conductivity that is adequate for practical application as a fuel cell diaphragm and can satisfactorily prevent the type of mechanical deterioration above, and a polymer electrolyte composition from which such polymer electrolyte membrane can be obtained. Moreover, other object is to provide a fuel cell that uses the polymer electrolyte membrane.

As a result of intensive investigation aiming at achieving the above objects, the inventors of the present invention have accomplished the present invention. In other worlds, the present invention provides the following <1>.

<1> A polymer electrolyte composition comprising a component (A) and a component (B) described below, wherein if the equivalent weight of cation exchange groups in the component (A) is termed Ic, and the equivalent weight of anion exchange groups in the component (B) is termed Ia, then an equivalent weight ratio represented by Ic/Ia is from 1 to 10,000.

(A) a cation exchange resin
(B) an anion exchange resin having a heterocyclic group containing a cationic nitrogen atom

Further, the present invention also provides the following <2> to <7> as specific embodiments relating to the above-mentioned <1>.

<2> The polymer electrolyte composition according to <1>, wherein the component (A) is a cation exchange resin having a sulfonic acid group.
<3> The polymer electrolyte composition according to <1> or <2>, wherein the component (A) is a cation exchange resin having an aromatic ring in the main chain.
<4> The polymer electrolyte composition according to any one of <1> to <3>, wherein the component (B) is an anion exchange resin having at least ane heterocyclic containing a cationic nitrogen atom selected from the group consisting

(B-1), (B-2), (B-3), (B-4) and (B-5) shown below:

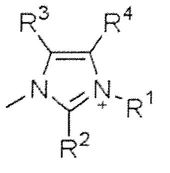
(B-1)

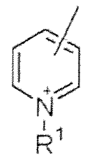
(B-2)

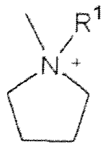
(B-3)

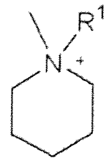
(B-4)

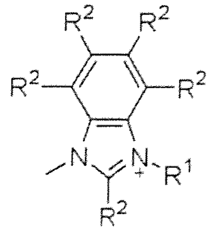
(B-5)

wherein $R^1$ represents an alkyl group of 1 to 20 carbon atoms, $R^2$ represents a hydrogen atom or an alkyl group of 1 to 20 carbon atoms, in a case where a single group has a plurality of $R^2$ groups, the plurality of $R^2$ groups may be the same or different, $R^3$ and $R^4$ each independently represent a hydrogen atom or an alkyl group of 1 to 20 carbon atoms, and may form a ring together with the carbon atoms to which they are respectively bonded.

<5> The polymer electrolyte composition according to any one of <1> to <4>, wherein the amount of the component (B) is from 0.1 to 30 parts by weight relative to 100 parts by weight of the component (A).

<6> The polymer electrolyte composition according to any one of <1> to <5>, further comprising a solvent.

<7> The polymer electrolyte composition according to any one of <1> to <6>, further comprising a catalyst component.

Furthermore, the present invention also provides fuel cell members of the following <8> to <10> and a fuel cell of the following <11>, each of which is formed using any one of the above-mentioned polymer electrolyte compositions.

<8> A polymer electrolyte membrane prepared from the electrolyte composition according to any one of <1> to <6>.

<9> A catalyst layer prepared from the polymer electrolyte composition according to <7>.

<10> A membrane-electrode assembly comprising the polymer electrolyte membrane according to <8> or the catalyst layer according to <9>.

<11> A solid polymer fuel cell comprising the membrane-electrode assembly according to <10>.

Moreover, the present invention also provides the following <12> as a resin that is suitable for the anion exchange resin of the component (B).

<12> An anion exchange resin comprising a structural unit represented by formula (2) having a heterocyclic group containing a cationic nitrogen atom:

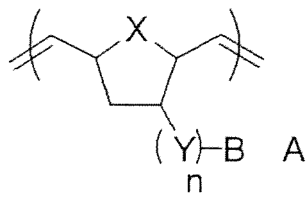
(2)

wherein B represents a heterocyclic group containing a cationic nitrogen atom, Y represents an alkylene group that may have a substituent or an arylene group that may have a substituent, n represents an integer of 0 to 10, in a case where n is 2 or greater, the plurality of Y groups may be the same or different, X represents a methylene group or an oxygen atom, and A represents an anion that is electrostatically equivalent to B.

BEST MODE FOR CARRYING OUT THE INVENTION

The polymer electrolyte composition of the present invention is described in detail below.

<Component B)>

The component (B) is an anion exchange resin, and comprises a heterocyclic group containing a cationic nitrogen atom (hereinafter referred to as a "cationic heterocyclic group"). Here, the term "cationic heterocyclic group" refers to a group obtained by removing, from a heterocyclic compound, one or two of the hydrogen atoms bonded to the heterocyclic compound, in which compound the nitrogen atom of a heterocyclic ring containing a nitrogen atoms, such as a pyrrole ring, an oxazole ring, an imidazole ring, a pyrazole ring, a pyridine ring, a pyrimidine ring, a pyrazine ring, a pyrrolidine ring, an imidazoline ring, an imidazolidine ring, a pyrazoline ring, a piperidine ring, a piperazine ring, a morpholine ring, a quinoline ring, an isoquinoline ring, a quinazoline ring, a quinoxaline ring, a naphthyridine ring, a carbazole ring, a phenazine ring or an indoline ring, has been quaternary alkylated or quaternary arylated.

Further, these cationic heterocyclic groups are each ionically bonded to an electrostatically equivalent anion, and exist in an electrically neutral form. Examples of this type of anion include a hydroxide ion, halide ions, $BF_4^-$, $PF_6^-$, $ClO_4^-$, $C_iF_{2i-1}CO_2^-$ (wherein i represents an integer of 1 to 4), $C_iF_{2i-1}SO_3^-$ (wherein i represents an integer of 1 to 4), $(FSO_2)_2N^-$, $(CF_3SO_2)_2N^-$, $(C_2F_5SO_2)_2N^-$, $(CF_3SO_2)_3C^-$, $CF_3SO_2NCOCF_3^-$ and $ArSO_2NSO_2CF_3^-$ (wherein Ar represents an aromatic group).

The inventors of the present invention postulated that the mechanical deterioration steaming from the dimensional change caused by swelling and shrinkage of the polymer electrolyte membrane could be resolved by improving the flexibility of the polymer electrolyte membrane, and investigated techniques for increasing the flexibility of the polymer electrolyte membrane. As a result, they the unique finding that a polymer electrolyte composition in which the above-mentionned type of anion exchange resin having a cationic heterocyclic group [component (B)] was employed in combination with a cation exchange resin of the component (A) described below yielded a polymer electrolyte membrane which, compared with a polymer electrolyte membrane formed solely from the component (A), exhibited a reduced elastic modulus, namely superior flexibility, with no marked loss of proton conductivity.

Examples of the main chain structure of the anion exchange resin of the component (B) include vinyl-based polymers (for example, polyethylenes, polypropylenes, polydienes, poly(meth)acrylates and polystyrenes), metathesis polymers of cyclic olefins, epoxy resins, polyesters formed by polymerizing a diol and a dicarboxylic acid, and polyisocyanates formed by polymerizing a diol and a diisocyanate. A resin that either contains the above-mentioned cationic heterocyclic group as a part of such main chain structures, or contains the cationic heterocyclic group as a side chain on the main chain structure, is used as the component (B). Among the main chain structures listed above, a vinyl-based polymer, an epoxy resin or a metathesis polymer of a cyclic olefin is preferable, a polydiene or a metathesis polymer of a cyclic olefin is more preferable, and a metathesis polymer of a cyclic olefin is still more preferable. Further, in terms of enabling easier production via the production method described below, the cationic heterocyclic group preferably exists as a side chain relative to the above-mentioned main chain structure.

The anion exchange resin of the component (B) can be produced by:

(i) a method in which a monomer containing a cationic heterocyclic group and a polymerizable group is polymerized, or
(ii) a method in which a monomer containing a polymerizable group and a reactive group that enables introduction of a cationic heterocyclic group is polymerized, and a cationic heterocyclic group is then introduced via the reactive group.

Examples of the polymerizable group include a vinyl group, a (meth)acrylic group, a group, a 1,4-pentadienyl group, a 1,5-hexadienyl group, a cyclopentenyl group, a cyclohexenyl group, a cycloheptenyl group, a cyclooctenyl group, a 2-norbornene group, a 7-oxabicyclo[2,2,1]hept-2-ene group, an epoxy group, an oxetane group and an isocyanate group.

Here, a method of producing the anion exchange resin using a monomer containing a vinyl group as the polymerizable group, a method of producing the anion exchange resin using a monomer containing an epoxy group as the polymerizable group, and a method of producing the anion exchange resin using a monomer containing an isocyanate group as the polymerizable group are described.

This cationic heterocyclic group in the anion exchange resin is preferably a cationic heterocyclic group selected from the group consisting of the following (B-1), (B-2), (B-3), (B-4) and (B-5), because the flexibility imparting effect on the polymer electrolyte is large:

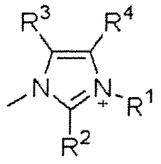
(B-1)

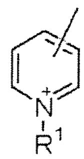
(B-2)

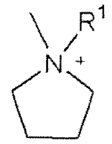
(B-3)

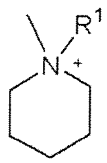
(B-4)

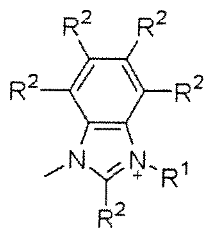
(B-5)

wherein $R^1$ represents an alkyl group of 1 to 20 carbon atoms, $R^2$ represents a hydrogen atom or an alkyl group of 1 to 20 carbon atoms, in a case where a single group has a plurality of $R^2$ groups, the plurality of $R^2$ groups may be the same or different. $R^3$and $R^4$ each independently represent a hydrogen atom or an alkyl group of 1 to 20 carbon atoms, and they may form a ring together with the carbon atoms to which they are respectively bonded.

Examples of monomers containing a cationic heterocyclic group and a polymerizable group, shown without the electrostatically equivalent anion, include the types of monomers illustrated below:

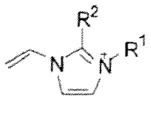
(C-1)

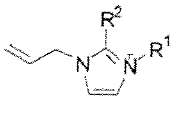
(C-2)

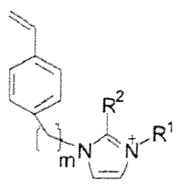
(C-3)

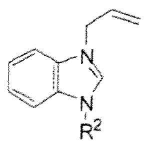
(C-4)

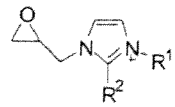
(C-5)

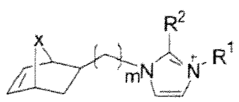
(C-6)

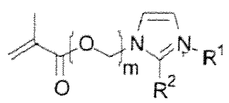
(C-7)

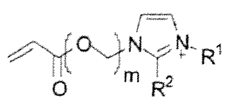
(C-8)

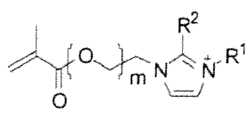
(C-9)

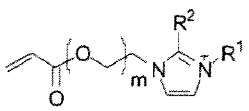
(C-10)

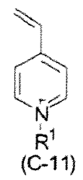
(C-11)

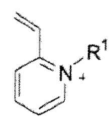
(C-12)

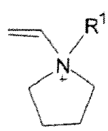
(C-13)

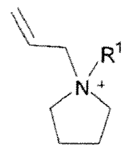
(C-14)

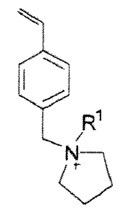
(C-15)

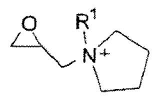
(C-16)

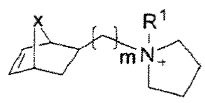
(C-17)

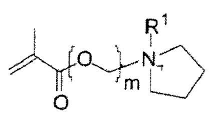
(C-18)

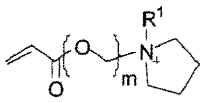

(C-19)

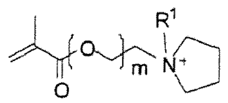

(C-20)

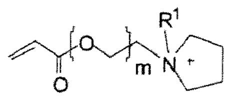

(C-21)

wherein $R^1$ and $R^3$ are the same as defined above, m represents an integer of 1 to 10, and X represents a methylene group ($-CH_2-$) or an oxygen atom.

Among these, monomers represented by C-1, C-3, C-4, C-7, C-8, C-9, C-10, C-1 and C-12 are preferable, and an anion exchange resin formed by a polymerization using either one monomer or a plurality of monomers selected from among these monomers is more preferable the component (B).

In C-1 to C-21, examples of the electrostatically equivalent anion include the same anions as those listed above.

Among the monomers containing a cationic heterocyclic group and a polymerizable group, monomers having a vinyl group a (meth)acrylic group or a styryl group (C-3, C-7, C-8, C-9, C-10) can be produced, for example, in accordance with the methods disclosed in Eletrochimica Acta, 2001, 46, 1723 and Macromolecules, 2005, 38, 2037.

Among monomers containing a cationic heterocyclic group and a polymerizable group, monomers having a norbornene structure (norbomene structure monomers) are particularly useful. The reason is that, in the present invention, the type of anion exchange resin formed by polymerizing a norbornene structure monomer produces a particularly preferable flexibility-imparting effect on the polymer electrolyte membrane. This type of norbornene structure monomer can be represented by the following formula (1):

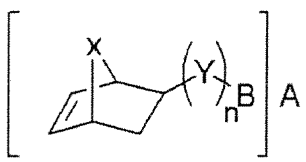

(1)

wherein B represents a cationic heterocyclic group, and is preferably at least one cationic heterocyclic group selected from the group consisting of the above-mentioned (B-1) to (B-5), Y represents an alkylene group that may have a substituent or an arylene group that may have a substituent, and is preferably $-CH_2-$, $-CF_2-$, a phenylene or a naphthylene, n represents an integer of 0 to 10, in a case where n is 2 or greater, the plurality of Y groups may be the same or different, X represents a methylene group or an oxygen atom, and A represents an anion that is electrostatically equivalent to B, examples of which are as listed above.

With respect to monomers comprising an imidazolyl group containing a quaternary nitrogen atom as the cationic heterocyclic group, the following two methods can be used.

1. A method in which a haloalkylnorbornene and an N-unsubstituted imidazole (hereinafter referred to as a "secondary imidazole") are reacted (first reaction), a reaction is then performed with an alkyl halide (second reaction), and an anion exchange is then performed if required.
2. A method in which a haloalkylnorbornene and an N-alkyl-substituted imidazole (hereinafter referred to as a "tertiary imidazole") are reacted, and an anion exchange is then performed if required.

First is a description of the method 1. A haloalkylnorbornene and a secondary imidazole are reacted with each other first to produce a compound containing an imidazoline group. This production can be conducted in a solvent, in the presence of a base.

Examples of the solvent to be used in the method 1 include aliphatic hydrocarbons, such as pentane, hexane, heptane, cyclopentane, cyclohexane and decalin, aromatic hydrocarbons, such as benzene, toluene, xylene, cumene, ethylbenzene, monochlorobenzene and dichlorobenzene, and ethers, such as diethyl ether, methyl t-butyl ether, tetrahydrofuran (THF), 1,3-dioxolane, 1,3-dioxane and 1,4-dioxane. Pentane, hexane, heptane, benzene, toluene, xylene, diethyl ether, methyl t-butyl ether, THF and 1,4-dioxane are preferable, and diethyl ether, methyl t-butyl ether, THF and 1,4-dioxane are more preferable. These solvents may be used individually, or two or more solvents may be used in a mixture.

Examples of the base to be used in the first reaction of the method 1 include alkali metal hydroxides, such as sodium hydroxide and potassium hydroxide, carbonates, such as sodium carbonate, potassium carbonate, sodium hydrogen carbonate and potassium hydrogen carbonate, and alkali metal hydrides, such as lithium hydride, sodium

hydride and potassium hydride. Among these, preferable bases to be used include sodium hydroxide, potassium hydroxide, sodium carbonate, sodium hydrogen carbonate, lithium hydride and sodium hydride.

The amount used of the base is usually from 0.5 to 10 equivalents, and preferably from 0.8 to 5 equivalents, per equivalent of the secondary imidazole that is used. If the equivalent weight of the base is too small, then the reaction progress tends to become extremely slow, whereas if the equivalent weight of the base is too large, then the amount of by-products tends to increase.

Examples of the secondary imidazole to be used in the first reaction of the method 1 include imidazole, 2-methylimidazole, 2-ethylimidazole, 2-n-propylimidazole, 2-isopropylimidazole, 2-n-butylimidazole, 2-phenylimidazole, 4-methylimidazole, 4-ethylimidazole, 4-nitroimidazole, 4-phenylimidazole, 2-methyl-4-phenylimidazole, 4,5-dimethylimidazole, 2,4,5-trimethylimidazole, 2,4,5-triphenylimidazole, benzimidazole, 2-methylbenzimidazole and 2-phenylbenzimidazole. Preferred among these are imidazole, 2-methylimidazole, 2-phenylimidazole, 4-methylimidazole, 4-phenylimidazole, 2-methyl-4-phenylimidazole, 4,5-dimethylimidazole, 2,4,5-trimethylimidazole, benzimidazole and 2-methylbenzimidazole.

The amount used of the secondary imidazole to be used in the first reaction of the method 1 is usually from 0.5 to 7 equivalents, preferably from 0.7 to 5 equivalents, and more preferably from 0.8 to 3 equivalents, per equivalent of the haloalkylnorbomene. If the amount of the secondary imidazole to be used is too small, then the yield may sometimes decrease, whereas if the amount is too large, then the target product tends to become difficult to purify.

The reaction temperature is usually selected from within a range of from -78°C to the boiling point of the solvent to be used, and is preferably set within a range of from 0°C to the boiling point of the solvent. Although there are no particular restrictions on the reaction time, the time is usually from 10 minutes to 72 hours. To stop the reaction, water or an aqueous solution of hydrochloric acid may be added to the reaction solution. Following stopping of the reaction, the product norbornene derivative containing an imidazolyl group can be obtained by performing typical post-processing operations such as extraction and washing. If required, a purification operation such as crystallization, distillation or the various chromatography techniques may be performed to further purify the norbornene derivative.

Subsequently, the nitrogen atom in the imidazolyl group of this compound is quaternary alkylated using an alkyl halide (the second reaction). Examples of the solvent to be used in the second reaction include aliphatic hydrocarbons, such as pentane, hexane, heptane, cyclopentane, cyclohexane and decalin, aromatic hydrocarbons, such as benzene, toluene, xylene, cumene, ethylbenzene, monochlorobenzene and dichlorobenzene, ethers, such as diethyl ether, methyl t-butyl ether, tetrahydrofuran (THF), 1,3-diaxalane, 1,3-dioxane and 1,4-dioxane, and halogenated hydrocarbons, such as dichloromethane, chloroform and 1,2-dichloroethane. The alkyl halide to be used as a reactant can also be used as the solvent. Among these solvents, pentane, hexane, heptane, benzene, toluene, xylene, diethyl ether, methyl t-butyl ether, THF, 1,4-dioxane, dichloromethane, chloroform, 1,2-dichloroethane and an alkyl halide are preferable, and dichloromethane, chloroform, 1,2-dichloroethane and an alkyl halide are more preferable. These solvents may be used individually, or two or more solvents may be used in a mixture.

Examples of the alkyl halide that is to be used include methyl bromide, methyl iodide, ethyl chloride, ethyl bromide, ethyl iodide, n-propyl chloride, n-propyl bromide, n-propyl iodide, n-butyl chloride, n-butyl bromide, n-butyl iodide, n-pentyl chloride, n-pentyl bromide, n-pentyl iodide, n-hexyl chloride, n-hexyl bromide, n-hexyl iodide, n-heptyl bromide and n-octyl bromide. Among these, methyl iodide, ethyl bromide, ethyl iodide, n-propyl chloride, n-propyl bromide, n-butyl chloride, n-butyl bromide, n-butyl iodide, n-pentyl chloride, n-pentyl bromide, n-hexyl chloride, n-hexyl bromide, and n-octyl bromide are preferable.

The amount used of the alkyl halide is usually from 0.5 to 20 equivalents, and preferably from 0.7 to 5 equivalents, per equivalent of the norbornene derivative containing an imidazolyl group. If the amount used is too small, then the yield tends to decrease, whereas if the amount is too large, then the burden on the purification process tends to increase.

The reaction temperature during the quaternary alkylation reaction is usually within a range of from 0°C to the boiling point of the solvent, and is preferably within a range of from room temperature to the boiling point of the solvent. Although there are no particular restrictions on the reaction time, the time is usually from 10 minutes to 72 hours. Following the completion of the reaction, the norbornene derivative containing a cationic heterocyclic group can be obtained by removing the solvent and excess alkyl halide by distillation under reduced pressure.

The thus obtained norbornene structure monomer usually includes a halide ion as an anion. If necessary, this anion can be replaced with a different anion, such as a hydroxide ion, a halide anion, $BF_4^-$, $PF_6^-$, $ClO_4^-$, $C_iF_{2i-1}CO_2^-$ (wherein i represents an integer of 1 to 4), $C_iF_{2i-1}SO_3^-$ (wherein i represents an integer of 1 to 4), $(FSO_2)_2N^-$, $(CF_3SO_2)_2N^-$, $(C_2F_5SO_2)_2N^-$, $(CF_3SO_2)_3C^-$, or $ArSO_2NSO_2CF_3^-$ (wherein Ar represents an aromatic group). The anion replacement can be conducted, for example, in accordance with the method disclosed in the above-mentioned Eletrochimica Acta, 2001, 46, 1723 and Macromolecules, 2005, 38, 2037

Next is a description of the methods 2. The reaction between the haloalkylnorbornene and the tertiary imidazole can be conducted in a solvent. Examples of solvents to be used include aliphatic hydrocarbons, such as pentane, hexane, heptane, cyclopentane, cyclohexane and decalin, aromatic hydrocarbons, such as benzene, toluene, xylene, cumene, ethylbenzene, monochlorobenzene and dichlorobenzene, ethers, such as diethyl ether, methyl t-butyl ether, THF, 1,3-dioxolane, 1,3-dioxane and 1,4-dioxane, and halogenated hydrocarbons, such as dichloromethane, chloroform and 1,2-dichloroethane. Preferred solvents include pentane, hexane, heptane, benzene, toluene, xylene, diethyl ether, methyl t-butyl ether, THF, 1,4-dioxane, dichloromethane, chloroform and 1,2-dichloroethane, and dichloromethane, chloroform and 1,2-dichloroethane are more preferable. These solvents may be used individually, or two or more solvents may be used in a mixture.

Examples of the tertiary imidazole to be used in the method 2 include 1-methylimidazole, 1-ethylimidazole, 1-propylimidazole, 1-butylimidazole, 1,2-dimethylimidazole, 1,2,4,5-tetramethylimidazole, 1-methylbenzimidazole, 1,2-dimethylbenzimidazole and N-benzyl-2-methylimidazole. Preferred tertiary imidazoles include 1-methylimidazole, 1-ethylimidazole, 1-propylimidazole, 1-butylimidazole, 1,2-dimethylimidazole, 1-methylbenzimidazole and 1,2-dimethylbenzimidazole.

The amount used of the tertiary imidazole is usually from 0.5 to 5 equivalents, preferably from 0.7 to 3 equivalents, and more preferably from 0.8 to 1.5 equivalents, per equivalent of the haloalkylnorbornene If the amount used is too small, then the yield tends to decrease, whereas if the amount used is too large, then the tertiary imidazole tends to become incorporated within the product, making purification of the product difficult. The reaction temperature can usually by selected from within a range of from 0°C to the boiling point of the solvent to be used, and is preferably within a range of from room temperature to the boiling point of the solvent. Following the completion of the reaction, the norbornene structure monomer containing a cationic heterocyclic group can be obtained by removing the solvent by distillation under reduced pressure.

The thus obtained norbornene structure monomer usually includes a halide ion as an anion. If necessary, this anion can be replaced with another anion, and the method for this replacement is similar to that described above for the method 1.

A description has been provided here of the production of a norbornene structure monomer comprising an imidazolyl group containing a quaternary nitrogen atom, but in those cases where a norbornene derivative comprising a cationic heterocyclic group represented by the above-mentioned (B-2), (B-3), (B-4) or (B-5) is to be produced, the norbornene structure monomer can be produced using the method 2 , by substituting the tertiary imidazole with an N-unsubstituted pyridine, an N-alkyl-substituted pyrrolidone, an N-alkyl-substituted piperidine, or an N-alkyl substituted benzimidazole respectively.

The haloalkylnorbornene to be used for producing the norbornene structure monomer can be produced, for example, in accordance with the method disclosed in Journal of the American Chemical Society, 2004, 126, 10945.

Preferred examples of this haloalkylnorbornene include 5-(bromomethyl)bicyclo[2.2.1]hept-2-ene, 5-(chloromethyl)bicyclo[2.2.1]hept-2-ene,5-(2-bromoethyl)bicyclo[2.2.1]hept-2-ene, 5-(3-bromo-n-propyl)bicyclo[2.2.1]hept-2-ene, 5-(4-bromo-n-butyl)bicyclo[2.2.1]hept-2-ene, 5-(6-bromo-n-hexyl)bicyclo[2.2.1]hept-2-ene and 5-(8-bromo-n-octyl)bicyclo[2.2.1]hept-2-ene.

By subjecting the obtained norbornene structure monomer containing a cationic heterocyclic group to ring-opening metathesis polymerization, an anion exchange resin comprising a structural unit represented by the following formula (2) can be produced.

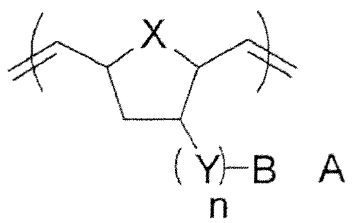

(2)

In the above formula, B represents a group containing a cationic heterocyclic group, and as described above, is preferably an imidazolyl group containing a quaternary nitrogen atom. Y represents an alkylene group that may have a substituent or an arylene group that may have a substituent, and is preferably $-CH_2-$, $-CF_2-$, a phenylene or a naphthylene. X represents a methylene group or an oxygen atom. n represents an integer of 0 to 10, and in a case where n is 2 or greater, the plurality of Y groups may be the same or different. A represents an anion that is electrostatically equivalent to B, and preferred examples include a hydroxide ion, halide ions, $BF_4^-$, $PF_6^-$, $ClO4^-$, $C_iF_{2i-1}CO_2^-$ (wherein i represents an integer of 1 to 4), $C_iF_{2i-1}SO_3^-$ (wherein i represents an integer of 1 to 4), $(FSO)_2N^-$, $(CF_3SO_2)_2N^-$, $(C_2F_5SO_2)_2N^-$, $(CF_3SO_2)_3C^-$, $CF_3SO_2NCOCF_3^-$ and $ArSO_2NSO_2CF_3^-$ (wherein Ar represents an aromatic group).

More specifically, examples of preferred anion exchange resins containing a cationic heterocyclic group include resins comprising a structural unit represented by the following (2A), (2B), (2C) or (2D). In these formulas, n has the same meaning as defined above, and the structural units are shown without the electrostatically equivalent anion.

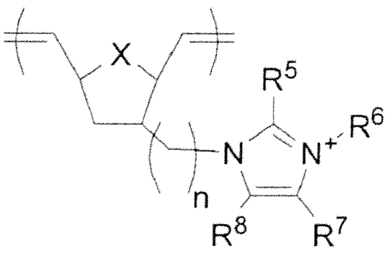

(2A)

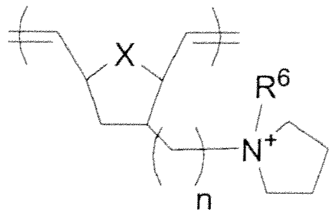

(2B)

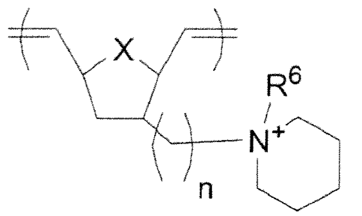

(2C)

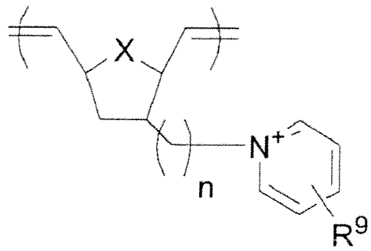

(2D)

In these formulas, $R^5$, $R^6$, $R^7$ and $R^8$, which may be the same or different, each represent an alkyl group of 1 to 20 carbon atoms, and $R^7$ and $R^8$ may be mutually bonded to form a ring together with the carbon atoms to which they are respectively bonded. $R^9$ represents a hydrogen atom or an alkyl group of 1 to 20 carbon atoms, n represents an integer of 1 to 10, and X represents a methylene group or an oxygen atom.

Among these types of structural units, for example, resins comprising the following types of structural units are preferable, if the ease of production of the norbornene derivative that gives rise to the structural unit, and the ease of production of the anion exchange resin in the ring-opening metathesis polymerization described below are taken into consideration.

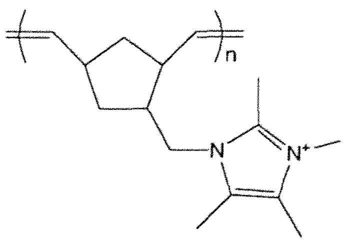

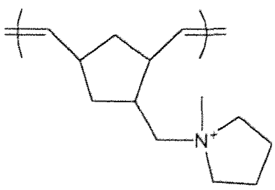

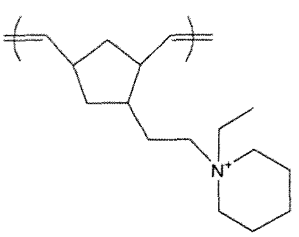

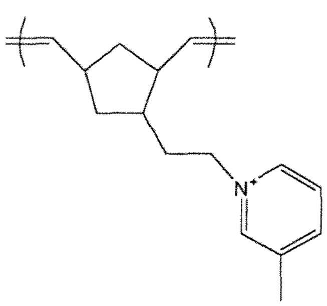

Of the various monomers containing a cationic heterocyclic group and a polymerizable group, a method of polymerizing norbornene structure monomers is disclosed in Grubbs, R.H. Handbook of Metathesis, 1st ed.; Grubbs, R.H., Ed; Wiley-VCH, and a norbornene structure monomer can be polymerized in accordance with this method.

Further, the anion exchange resin to be used as the component (B) can also be produced via a series of operations, by first producing a polymer comprising a reactive group that enables the introduction of a cationic heterocyclic group, and then using the reactive group in the polymer to introduce a cationic heterocyclic group.

A halogeno group is preferred as the reactive group, and a description is provided here of a method in which a polymer comprising a halogeno group as a reactive group and a tertiary imidazole are reacted together to produce an anion exchange resin. Examples of the polymer comprising a halogeno group include polyvinyl chloride and poly (haloalkyl)norbornenes obtained by subjecting an above-mentioned haloalkylnorbornene to ring-opening metathesis polymerization. Examples of the resin to be used for producing the anion exchange resin include poly(haloalkyl)norbornenes obtained by subjecting a haloalkylnorbornene to ring-opening metathesis polymerization. The ring-opening metathesis polymerization can be performed in accordance with the method disclosed in the above-mentioned Grubbs, R.H. Handbook of Metathesis, 1st ed.; Grubbs, R.H., Ed; Wiley-VCH.

The reaction between the polymer comprising a halogeno group and the tertiary imidazole is usually performed in a solvent. The solvent to be used in the reaction is selected from among those solvents capable of dissolving the polymer and tertiary imidazole to be used, and examples of solvents that can be used include aliphatic hydrocarbons, such as pentane, hexane, heptane, cyclopentane, cyclohexane and decalin, aromatic hydrocarbons, such as benzene, toluene, xylene, cumene, ethylbenzene, monochlorobenzene and dichlorobenzene, ethers, such as diethyl ether, methyl t-butyl ether, THF, 1,3-dioxolane, 1,3-dioxane and 1,4-dioxane, and halogenated hydrocarbons such as dichloromethane, chloroform and 1,2-dichloroethane. Preferred among these are THF, 1,4-dioxane, dichloromethane, chloroform and 1,2-dichloroethane. These solvents may be used individually, or two or more solvents may be used in a mixture. As the tertiary imidazole to be used in this reaction, the compounds listed above can be used.

As the tertiary imidazole used in the reaction, the tertiary imidazoles listed above can be used. The amount used of the tertiary imidazole is usually from 0.5 to 5 equivalents, preferably from 0.7 to 3 equivalents, and more preferably from 0.8 to 3 equivalents, per equivalent of the halogeno group contained within the polymer comprising the halogeno group. If the amount used is too small, then the proportion of halogeno groups converted to imidazolyl groups containing a quaternary nitrogen atom decreases, whereas if the amount used is too large, then the burden on the purification process tends to increase. The reaction temperature is usually selected from within a range of from 0°C to the boiling point of the solvent, and is preferably selected from within a range af from room temperature to the boiling point of the solvent. Although there are no particular restrictions on the reaction time, the time is usually from 10 minutes to 72 hours. Following the completion of the reaction, the target anion exchange resin containing a cationic heterocyclic group can be obtained by precipitating the product by adding the reaction solution, either following concentration or simply as is, to a solvent that exhibits a low degree of solubility for the produced polymer, performing a filtration or decantation, conducting washing if required, and then drying the product.

<Component (A)>

The cation exchange resin of the component (A) to be used in the present invention is a resin comprising a cation exchange group, such as a sulfonic acid group ($-SO_3H$), a carboxyl group (-COOH), a phosphonic acid group ($-PO(OH)_2$), a phosphinic acid group (-POH(OH)), a disulfonylimide group ($-SO_2NHSO_2-$), a phenolic hydroxyl group (-Ph(OH) (wherein Ph represents a phenyl group)), or an oxocarbon group represented by the following formula (3):

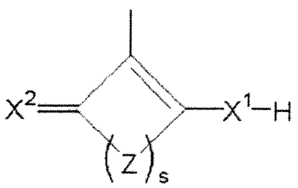

(3)

wherein $X^1$ and $X^2$ are the same or different, and each represent -O-, -S- or $-NR^{30}-$, Z represents -CO-, -C(S)-, $-C(NR^{30})-$, an alkylene group of 1 to 6 carbon atoms that may have a substituent or an arylene group of 6 to 10 carbon atoms may have a substituent, s represents a repetition number and represents a number of 0 to 10, the s Z groups may be the same or different, $R^{30}$ represents -OH, -SH, $-NHR^{31}$, an alkyl group of 1 to 6 carbon atoms that may have a substituent, an aryl group of 6 to 10 carbon atoms that may have a substituent or an aralkyl group of 7 to 16 carbon atoms that may have a substituent, and $R^{31}$ represents a hydrogen atom, an alkyl group of 1 to 6 carbon atoms that may have a

substituent, or an aryl group of 6 to 10 carbon atoms that may have a substituent, and a portion or all of these cation exchange groups may form salts with counter ions.

The cation exchange group is preferably selected from the group consisting of a sulfonic acid group, a phosphonic acid group, a phosphinic acid group and a disulfonylimide group, is more preferably a sulfonic acid group and/or a phosphonic acid group, and is most preferably a sulfonic acid group. These cation exchange groups may form a salt as mentioned above, but when used as a polymer electrolyte membrane that functions as a fuel cell diaphragm, substantially all of the cation exchange groups are preferably in a free acid form.

Representative examples of the cation exchange resin include:

(i) cation exchange resins in which cation exchange groups have been introduced into a polymer comprising a main chain composed of an aliphatic hydrocarbon,
(ii) cation exchange resins in which cation exchange groups have been introduced into a polymer composed of an aliphatic hydrocarbon in which some or all of the hydrogen atoms in the main chain have been substituted with fluorine atoms,
(iii) cation exchange resins in which cation exchange groups have been introduced into a polymer in which the main chain comprises aromatic rings,
(iv) cation exchange resins in which cation exchange groups have been introduced into a polymer composed of an inorganic material in which the main chain comprises substantially no carbon atoms, and
(v) cation exchange resins formed from a copolymer composed of a plurality of structural units that constitute (i) to (iv).

Examples of the cation exchange resins of(i) include polyninylsulfonic acid, polystyrenesulfonic acid and poly (α-methylstyrene)sulfonic acid.

Further, examples of the cation exchange resins of (ii) include polymers comprising perfluaroalkylsulfonic acid groups in side chains, and in which the main chain is a perfluoroalkyl, typified by Nation (a registered trademark of E.I. DuPont de Nemours and Company), sulfonic acid type polystyrene-graft-ethylene-tetrafluoroethylene copolymers composed of a main chain produced by copolymerization of a fluorocarbon-based vinyl monomer and a hydrocarbon-based vinyl monomer, and hydrocarbon-based side chains containing a sulfonic acid group (ETFE, see, for example, JP-09-102322-A), and sulfonic acid type poly(trifluorostyrene)-graft-ETFE membranes obtained by graft polymerization of an α,β,β-trifluorostyrene onto a copolymer of a fluorocarbon-based vinyl monomer and a hydrocarbon-based vinyl monomer, and subsequent introduction of sulfonic acid groups to produce a solid polymer electrolyte membrane (see, for example, U.S. Pat. No. 4,012,303 and U.S. Pat. No. 4,605,685).

In the cation exchange resins of (iii), the main chain may be interrupted with a hetero atom such as an oxygen atom, and examples include resins in which ion exchange groups have been introduced into a polymer such as a polyetheretherketone, a polysulfone, a polyethersulfone, a poly(arylene ether), a polyimide, a poly((4-phenoxybenzoyl)-1,4-phenylene), a polyphenylene sulfide or a polyphenylquinoxalene, as well as a sulfoarylated polybenzimidazole, a sulfoalkylated polybenzimidazole, a phosphoalkylated polybenzimidazole (see, for example, JP-09-110982-A), and a phosphonated poly(phenylene ether) (see, for example, J. Appl. Polym. Sci., 18, 1969 (1974)).

Further, examples of the cation exchange resins of (iv) include resins in which ion exchange groups have been introduced into polyphosphazene, and the polysiloxane comprising phosphonic acid groups disclosed in Polymer Prep., 41, Neo. 1, 70 (2000).

The polymer electrolyte of (v) may be a random copolymer containing introduced ion exchange groups, an alternating copolymer containing introduced ion exchange groups, or a block copolymer containing introduced ion exchange groups. Examples of the random copolymer containing introduced ion exchange groups include sulfonated polyethersulfone-dihydroxybiphenyl copolymers (see, for example, JP-11-116679-A). In the block copolymer, specific examples of blocks containing a sulfonic acid group include those disclosed in JP-2001-250567-A.

The cation exchange resin of the component (A) to be used in the present invention is preferably a cation exchange resin classified as the above-mentioned type (iii), in which the main chain comprises aromatic rings, and resins in which the main chain structure is composed of structural units comprising an aromatic ring, and these structural units include a combination of structural units containing a cation exchange group and structural units containing no ion exchange groups (neither a cation exchange group nor an anion exchange group) are preferable. Cation exchange resins comprising a segment formed mainly from structural units having a cation exchange group (a segment having cation exchange groups) and a segment formed mainly from structural units having no ion exchange group (a segment having substantially no ion exchange groups), and in which the copolymerization mode is either block copolymerization or graft copolymerization are particularly preferable. Here, the "segment having cation exchange groups" means a segment which contains an average of at least 0.5 cation exchange groups per structural unit that constitutes the segment, and which preferably contains an average of at least 1 cation exchange group per structural unit. On the other hand, the "segment having substantially no ion exchange groups" means a segment which contains an average of not more than 0.1 ion exchange groups per structural unit that constitutes the segment, preferably contains an average of not

more than 0.05 ion exchange groups per structural unit, and more preferably contains no ion exchange groups.

The weight average molecular weight of the cation exchange resin of the component (A) to be used in the present invention is preferably approximately from 1,000 to 1,000,000, and is more preferably approximately from 5.000 to 200,000.

In the present invention, [amount of ion exchange groups in cation exchange resin (mmol)] / [weight of cation exchange resin (g)], namely, the equivalent weight of ion exchange groups in the cation exchange resin is preferably approximately from 0.05 to 5 mmol/g, and is more preferably approximately from 0.5 to 4 mmol/g.

<Polymer Electrolyte Composition>

The polymer electrolyte composition of the present invention comprises the component (A) and the component (B), and the content ratio between these components is adjusted such that a ratio (ion exchange group equivalent weight ratio) Ic/Ia between the equivalent weight Ic of cation exchange groups in the component (A), and the equivalent weight Ia of anion exchange groups in the component (B) is from 1 to 10,000. This ion exchange group equivalent weight ratio Ic/Ia is preferably from 1.5 to 1,000, and more preferably from 2 to 100. If the ion exchange group equivalent weight ratio is lower than this range, then it becomes less likely that the polymer electrolyte membrane obtained from the polymer electrolyte composition will exhibit a practically applicable level of proton conductivity. In contrast, if the ion exchange group equivalent weight ratio is higher than this range, then it becomes unlikely that the polymer electrolyte membrane will exhibit satisfactory flexibility, meaning it becomes impossible to maintain a favorable balance between the swelling and shrinkage of the polymer electrolyte membrane and the surface pressure.

This ion exchange group equivalent weight ratio can be calculated easily in the following manner.

In those cases where a single cation exchange resin is used as the component (A), the equivalent weight Ic of cation exchange groups can be determined from the ion exchange group equivalent weight of the cation exchange resin, the weight Wt (g) of the polymer electrolyte composition, and the weight proportion $W_A$ (wt%) of the component (A) within the polymer electrolyte composition. In other words, the following calculation may be performed.

$$Ic = Wt \times W_A \times (\text{ion exchange group equivalent weight of cation exchange resin}) \quad \text{... (numerical formula 1)}$$

In those cases where a plurality of cation exchange resins are used as the component (A), the ion exchange group equivalent weight of the cation exchange resin in numerical formula 1 is determined as follows. Namely, using an additive formula, an average ion exchange group equivalent weight is determined from the ion exchange group equivalent weight of each of the plurality of cation exchange resins, and the weight proportion of that particular resin relative to the total weight of the component (A), and the thus determined average ion exchange group equivalent weight is then substituted into numerical formula 1 as the cation exchange resin ion exchange group equivalent weight to calculate Ic.

Similarly, in those cases where a single anion exchange resin containing a cationic heterocyclic group is used as the component (B), first, the equivalent weight of cationic heterocyclic groups per unit weight of the anion exchange resin is determined. Then, using this equivalent weight, the weight Wt (g) of the polymer electrolyte composition, and the weight proportion $W_B$ (wt%) of the component (B) within the polymer electrolyte composition, Ia can be determined from the following formula.

$$Ia = Wt \times W_B \times (\text{equivalent weight}) \quad \text{of cationic heterocyclic groups per unit weight of the anion exchange resin}) \quad \text{... (numerical formula 2)}$$

In those cases where a plurality of anion exchange resins are used as the component (B), the equivalent weight of cationic heterocyclic groups per unit weight of the anion exchange resin in numerical formula 2 is determined as follows. Namely, using an additive formula, an average equivalent weight is determined from the cationic heterocyclic group equivalent weight for each of the plurality of anion exchange resins, and the weight proportion of that particular resin relative to the total weight of the component (B), and the thus determined average equivalent weight is then substituted into numerical formula 2 as the ion exchange group equivalent weight of the cation exchange resin to calculate Ia.

The polymer electrolyte composition of the present invention can be obtained by mixing the component (A)

and the component (B) such that the ion exchange group equivalent weight ratio between the two components satisfies a specific range. Accordingly, the numbers of parts by weight used of the component (A) and the component (B) are determined so that this ion exchange group equivalent weight ratio is satisfied, and the amount of the component (B) is preferably from 0.1 to 30 parts by weight, and more preferably from 0.5 to 25 parts by weight, per 100 parts by weight of the component (A).

Examples of methods of producing the polymer electrolyte composition of the present invention include:

(1) a method in which the component (A) and the component (B) are mixed by being dissolved, dispersed or suspended in a solvent, and the solvent is subsequently removed, and
(2) a method in which the component (B) is dissolved, dispersed or suspended in a solvent that does not dissolve the component (A), and the component (A) is then immersed in the resulting liquid, causing the component (A) to be impregnated with the component (B) and/or causing the component (B) to adhere to the component (A).

The solvent to be used in (1) or (2) may be selected appropriately from among water, alcohol-based solvents, ketone-based solvents, ether-based solvents, halogen-based solvents, sulfoxide-based solvents, sulfone-based solvents, amide-based solvents, aliphatic hydrocarbon solvents, aromatic hydrocarbon solvents, and mixed solvents thereof.

Examples of the alcohol-based solvents include methanol, ethanol, isopropanol and butanol, and examples of the ketone-based solvents include acetone, methyl isobutyl ketone, methyl ethyl ketone and benzophenone. Examples of the ether-based solvents include diethyl ether, dibutyl ether, diphenyl ether, tetrahydrofuran (hereinafter abbreviated as THF), dioxane, dioxolane, ethylene glycol monomethyl ether, ethylene glycol monoethyl ether, propylene glycol monomethyl ether and propylene glycol monoethyl ether. Examples of the halogen-based solvents include chloroform, dichloromethane, 1,2-dichloroethane, 1,1,2,2-tetrachloroethane, chlorobenzene and dichlorobenzene, and an example of a sulfoxide-based solvent is dimethylsulfoxide (hereinafter abbreviated DMSO). Examples of the sulfone-based solvents include diphenylsulfone and sulfolane, and examples of the amide-based solvents include N,N-dimethylacetamide (hereinafter abbreviated as DMAc), N-methylacetamide, N,N-dimethylformamide (hereinafter abbreviated as DMF), N-methylformamide, formamide and N-methylpyrrolidone (hereinafter abbreviated as NMP). Examples of the aliphatic hydrocarbon solvents include pentane, hexane, heptane and octane, and examples of the aromatic hydrocarbons include benzene, toluene and xylene.

Of these, the solvent is preferably selected from among water, alcohol-based solvents, ether-based solvents, halogen-based solvents, amide-based solvents, and mixed solvents thereof. Selection of the solvent from among water, methanol, THF, dichloromethane, DMAc, and mixed solvents thereof is more preferable.

The polymer electrolyte composition of the present invention may or may not include other components besides the component (A) and the component (B).

An example of the method used for removing the solvent is a method in which the solvent of the mixed solution, dispersion or suspension is removed by evaporation, but in the case of the production method (1), a membrane can also be formed using the solvent casting method described below.

The polymer electrolyte composition of the present invention can be produced in the manner described above, but if the cation exchange groups in the component (A) exist in a free acid form (the form that contains a hydrogen ion as the counter ion), and the cationic heterocyclic groups in the component (B) exist in a free base form (the form that contains a hydroxide ion as the counter ion), then electrostatic bonding between the ion exchange groups may make it difficult to favorably mix the component (A) and the component (B). In order to enable more favorable mixing of the component (A) and the component (B), preferably, a portion or all of the counter ions bonded to the cation exchange groups in the component (A) are first replaced by ion exchange with ions other than a hydrogen ion, such as lithium ions, sodium ions, animonium ions or organic ammonium ions, and the resulting cation exchange resin of the component (A) that has undergone ion exchange with these ions other than a hydrogen ion is then mixed with the component (B). Similarly, a method in which a portion or all of the counter ions bonded to the cationic heterocyclic groups in the component (B) are first replaced by ion exchange with ions other than a hydroxide ion, and the resulting component (B) that has undergone ion exchange with these ions other than a hydroxide ion is then mixed with the component (A) is also preferable.

<Polymer Electrolyte Membrane>

In order to form a polymer electrolyte membrane from the polymer electrolyte composition of the present invention, conventional methods such as melt molding or solvent casting can be used, and of these, a solvent casting method is preferable.

This solvent casting method is a method in which the above-mentioned component (A) and component (B) are dissolved in a suitable solvent, the resulting polymer electrolyte solution is cast onto a support substrate, such as a glass plate or a PET (polyethylene terephthalate) substrate, to form a cast film, and the solvent is then removed from this cast film to form a polymer electrolyte membrane. In other words, the polymer electrolyte solution to be used in this solvent

casting method can be viewed as an embodiment of the polymer electrolyte composition of the present invention that includes a solvent in addition to the component (A) and the component (B).

There are no particular restrictions on the solvent to be used in the solvent casting method, provided it is capable of dissolving both of the above-mentioned component (A) and component (B), and can subsequently be removed, and examples of solvents that can be used favorably include aprotic polar solvents, such as N,N-dimethylformamide (DMF), N;N-dimethylacetamide (DMAc), N-methyl-2-pyrrolidone (NMP) and dimethylsulfoxide (DMSO), chlorine-based solvents, such as dichloromethane, chloroform, 1,2-dichloroethane, chlorobenzene and dichlorobenzene, alcohols, such as methanol, ethanol and propanol, alkylene glycol monoalkyl ethers, such as ethylene glycol monomethyl ether, ethylene glycol monoethyl ether, propylene glycol monomethyl ether and propylene glycol monoethyl ether, and ether-based solvents, such as tetrahydrofuran (THF), 1,3-dioxolane, 1,4-dioxane, 1,3-dioxane, tetrahydropyran, dibutyl ether, tert-butyl methyl ether, diphenyl ether and crown ethers. Any one of these solvents can be used individually, or if required, two or more solvents can be used as a solvent mixture.

Among these solvents, DMSO, DMF, DMAc, NMP, THF and 1,3-dioxolane exhibit excellent dissolution of the types of preferred components (A) and (B) described above, and are therefore preferable. Further, in those cases where, as described above, for the purpose of improving the mixing properties of the component (A) and the component (B), a resin is used in which a portion or all of the cation exchange groups in the component (A) have been subjected to ion exchange with an ion other than a hydrogen ion, if an ion having a relatively small ion radius such as a lithium ion, or an organic ammonium ion is used as this ion other than a hydrogen ion, then a cation exchange resin is formed that exhibits adequate solubility in the preferred solvents described above.

Although there are no particular restrictions on the thickness of the polymer electrolyte membrane to be produced from the polymer electrolyte composition of the present invention, the thickness is preferably within a range of from 5 to 300 μm, and is more preferably within a range of from 20 to 100 μm. With a polymer electrolyse membrane that is thinner than 5 μm, a practical level of strength may sometimes not be able to be satisfactorily maintained, whereas with a polymer electrolyte membrane that is thicker than 300 μm, the membrane resistance tends to become too large, and the properties of electrochemical devices such as a fuel cell diaphragm may sometimes deteriorate. The thickness of the polymer electrolyte membrane can be controlled by altering the concentration of the polymer electrolyte solution to be used in the solvent casting method and the thickness of the cast film formed on the support substrate.

Furthermore, for the purpose of improving various physical properties of the polymer electrolyte membrane, the types of plasticizers, stabilizers and mold release agents used in typical polymers can also be added to the polymer electrolyte composition of the present invention. Furthermore, another polymer may be subjected to composite alloying with the polymer of the present invention by using a method in which mixed cocasting is performed in a single solvent.

Moreover, in order to facilitate water control in a fuel cell member, the addition of inorganic or organic fine particles as a water retention agent is also known. Any of these known methods can be used providing they do not act counter to the objects of the present invention.

Further, the polymer electrolyte membrane can also be subjected to cross-linking by irradiation with an electron beam or radiation for the purpose of improving the mechanical strength of the membrane. Moreover, a method in which a porous film or sheet is impregnated with the polymer electrolyte composition to form a composite membrane, and a method in which the polymer electrolyte composition is mixed with a fiber or pulp to reinforce the polymer electrolyte membrane are also known, and any of these known methods can be used providing they do not act counter to the objects of the present invention.

In those cases where the component (A) in the polymer electrolyte composition to be used in producing the above-mentioned polymer electrolyte membrane is a cation exchange resin containing cation exchange groups that have undergone ion exchange with a counter ion other than a hydrogen ion, the obtained polymer electrolyte membrane is preferably subjected to an acid treatment to convert the cation exchange groups of the cation exchange resin to a free acid form. Further, although this acid treatment causes the cationic heterocyclic groups in the anion exchange resin of the component (B) to form salts with counter ions other than a hydroxide ion, even in this case, the polymer electrolyte membrane is able to exhibit a satisfactory degree of flexibility. The reasons for this are not entirely clear, but are based on the unique findings of the inventors of the present invention.

<Fuel Cell>

Next is a description of a fuel cell produced using the polymer electrolyte composition of the present invention.

The fuel cell of the present invention can be produced by bonding a catalyst component and a conductive substance that acts as a current collector to both surfaces of a polymer electrolyte membrane formed from the polymer electrolyte composition of the present invention.

There are no particular restrictions on the catalyst component, provided it is capable of activating the redox reaction of hydrogen or oxygen, and conventional materials can be used, and it is preferable to use microparticles of platinum or a platinum-based alloy as the catalyst component. These microparticles of platinum or a platinum-based

alloy are often supported on particulate or fiber-like carbon such as activated carbon or graphite for use as the catalyst component.

Furthermore, by preparing a paste (catalyst ink) by mixing carbon-supported platinum or platinum-based alloy with a solvent of a perfluoroalkylsulfonic acid resin, and then applying this paste to the gas diffusion layer and performing drying, a catalyst layer that is laminated to, and integrated with, the gas diffusion layer is obtained. By bonding the formed catalyst layer to a polymer electrolyte membrane, a membrane-electrode assembly for a fuel cell can be obtained. A specific example of the method that can be used is the conventional method disclosed in J. Electrochem. Soc., Electrochemical Science and Technology, 1988, 135(9), 2209. Furthermore, a membrane-electrode assembly for a fuel cell can also be obtained by applying the catalyst ink to a polymer electrolyte membrane or polymer electrolyte composite membrane, drying the ink, and then forming a catalyst layer directly on the surface of the resulting film.

Regarding the catalyst ink used in producing the catalyst layer, a mixture of the component (A) and the component (B) can be used instead of the above-mentioned perfluoroalkylsulfonic acid resin. This type of catalyst ink comprising the component (A) and the component (B) can be viewed as an embodiment of the polymer electrolyte composition of the present invention that includes a catalyst component.

Regarding the conductive substance that acts as a current collector, conventional substances can be used, and a porous carbon woven fabric, a carbon non-woven fabric or carbon paper is preferable because it efficiently transports the raw material gases to the catalyst.

A fuel cell of the present invention produced in this manner can be used in various manner of configurations, using hydrogen gas, reformed hydrogen gas or methanol as the fuel. Because this fuel cell comprises a polymer electrolyte membrane that exhibits satisfactory proton conductivity and/or a catalyst layer, it exhibits superior electric power generation performance, and with regard to the polymer electrolyte membrane, because the balance between the swelling/shrinkage and the surface pressure can be favorably maintained, a fuel cell is obtained that is capable of stable long-term operation. Accordingly, the polymer electrolyte composition of the present invention that makes the realization of this type of fuel cell possible is extremely useful industrially.

The present invention is described in further detail below based on a series of examples, but the present invention is in no way limited by these examples.

Measurement of Storage Elastic Modulus

The storage elastic modulus was determined by measurement of the dynamic viscoelasticity under the following conditions.

Apparatus: DVA-220, IT Keisoku Seigyo Co., Ltd.
Frequency: 10 Hz
Strain amplitude: 0.1%
Temperature: increased from 23 °C to 250°C at 5°C/min.
Temperature at which storage modulus is read: the value was read at 100°C once the storage elastic modulus had stabilized.
A lower value for the storage elastic modulus indicates a more flexible material.

Measurement of Proton Conductivity

The membrane resistance was measured using the method disclosed in "Shin Jikken Kagaku Koza (Lectures in New Experimental Chemistry) 19 - Kobunshi Kagaku (Polymer Chemistry) (II)", page 992 (edited by The Chemical Society of Japan, published by Maruzen Co., Ltd.).

The cell used was made of carbon, and the terminals of the impedance measuring apparatus were connected directly to the cell, without using a platinum black-coated platinum electrode. First, the polymer electrolyte membrane was set in the cell and the resistance was measured, the polymer electrolyte membrane was then removed and the resistance was re-measured, and the membrane resistance was then calculated from the difference between the two values. As the solution that was brought into contact with the two sides of the polymer electrolyte membrane, 1 mol/L dilute sulfuric acid was used. Each measurement was conducted at 23°C. The proton conductivity was calculated from the membrane thickness when immersed in the dilute sulfuric acid, and the resistance value.

Production Example 1 [Production of polymer electrolyte membrane]

Referring to the method disclosed in example 7 and example 21 of WO2007/043274 and using Sumikaexcel PES 5200P (manufactured by Sumitomo Chemical Co., Ltd.), a block copolymer type cation exchange resin (ion exchange capacity = 2.50 meq/g, Mw = 340,000, Mn = 160,000) was synthesized which was composed of a segment having a

sulfonic acid group, formed of a structural unit represented by the following formula:

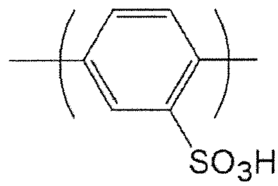

and a segment having no ion exchange groups, represented by the following formula.

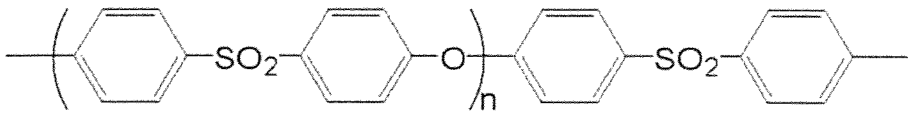

This resin was in an excess amount of an aqueous solution of lithium hydroxide for 24 hours, was subsequently, washed thoroughly with water until the wash water was neutral, and was then dried to complete the synthesis of a lithium salt type cation exchange resin 1.

Production Example 2 [Production of 5-(3-bromo-n-propyl)-2-norbomene]

A pressure-resistant tube was charged with 18.3 mL of dicyclopentadiene, 9.9 g of 5-bromo-1-pentene and 20 mg of 2,6-di-tert-butyl-p-cresol, and dissolved oxygen was expelled by freeze degassing and substituted with nitrogen. Following stirring under heat at 180°C for 22 hours, the reaction mixture was cooled to room temperature, yielding a crude product. By subjecting the crude product to distillation under reduced pressure, 18.4 g of an endo/exo isomeric mixture of 5-(3-bromo-n-propyl)-2-norbomene was obtained.
$^1$H-NMR (270 MHz, $CDCl_3$) 0.51 (m, 0.86H), 1.18-1.57 (m, 4.14H), 1.83-2.03 (m, 4H), 2.55 (br s, 0.2H), 2.77 (br s, 1.8H), 3.36-3.43 (m, 2H), 5.92-6.17 (m, 2H)

Production Example 3 [Production ofpoly(5-(3-bromo-n-propyl)-2-norbomene)]

In 10 mL of chloroform were dissolved 1.72 g of the 5-(3-bromo-n-propyl)-2-norbornene obtained in production example 1 and 6.3 μL of 1,4-diacetoxy-cis-2-butene, and the temperature was increased to 50°C. To this solution was added a solution prepared by dissolving 6.8 mg of (1,3-bis(2,4,6-trimethylphenyl)-2-imidazolidinylidene)-dichloro(phenylmethylene)(tricyclohexylphosphine)ruthenium in 1 mL of chloroform. Following stirring for 9 hours at 50°C, the reaction mixture was cooled to room temperature, and 1 mL of ethyl vinyl ether was added. The resulting solution was cooled to 0°C and added dropwise to methanol (200 mL), and the precipitated polymer was filtered, washed with methanol, and then dried under reduced pressure, yielding 1.70 g of the target polymer.
$^1$H-NMR (270 MHz, $CDCl_3$) 1.09-1.96 (m, 9H), 2.43-2.92 (m, 4H), 3.39 (br s, 2H), 5.20-5.31 (m, 2H)

Example 1 [Production of a polymer having imidazolium groups as cationic heterocyclic groups]

In 20 mL of chloroform were dissolved 0.5 g of the polymer obtained in production example 2 and 0.5 mL of N-methylimidazole, and the solution was stirred for 32 hours at 45°C. The solvent was concentrated, and the resulting solid was then washed with hexane and dried under reduced pressure, yielding 0.71 g of a polymer having imidazolium groups as cationic heterocyclic groups (anion exchange resin 1).

Example 2 [Polymer electrolyte composition and polymer electrolyte membrane]

The lithium salt type cation exchange resin 1 obtained in production example 1 and the anion exchange resin 1 obtained in example 1 were combined in a weight ratio of (lithium salt type cation exchange resin 1) / ( anion exchange resin 1) = 95% by weight / 5% by weight, and dissolved in dimethylsulfoxide at a concentration of approximately 8.5% by weight, thus preparing a polymer electrolyte composition comprising a solvent (a polymer electrolyte solution).

Subsequently, this polymer electrolyte solution was applied uniformly onto a PET substrate. Following the application, the polymer electrolyte solution was dried at 80°C under normal pressure. The resulting membrane was then immersed in 2N sulfuric acid aqueous solution to convert it to a sulfonic acid form, and following washing, was washed with ion exchanged water, dried at ambient temperature, and then peeled away from the PET substrate, yielding a polymer electrolyte membrane 1.

The dynamic viscoelasticity of the thus obtained polymer electrolyte membrane 1 was measured, and the storage elastic modulus was determined. Further, the proton conductivity of the polymer electrolyte membrane 1 was also determined. These results are shown in Table 1.

Comparative Example 1 [Production of polymer electrolyte membrane 2]

With the exception of preparing a polymer electrolyte solution by dissolving the lithium salt type cation exchange resin 1 obtained in production example 1 in dimethylsulfoxide at a concentration of approximately 8.5% by weight, without first performing mixing with the anion exchange resin 1, a polymer electrolyte membrane 2 was produced using the same method as example 1.

With regard to the obtained polymer electrolyte membrane 2, the dynamic viscoelasticity was measured and the storage elastic modulus was determined using the same method as example 1. Further, the proton conductivity of the polymer electrolyte membrane 2 was also determined. These results are shown in Table 1.

Table 1

| | Storage elastic modulus (MPa) | Proton conductivity (S/cm) |
|---|---|---|
| Example 1 | 2800 | 1.33E-01 |
| Comparative example 1 | 3200 | 1.06E-01 |

From the above results, it was clear that when an anion exchange resin containing a cationic heterocyclic group of the component (B) was added to a cation exchange resin of the component (A), the flexibility of a polymer electrolyte membrane could be improved while retaining a high proton conductivity. Accordingly, a fuel cell member such as a polymer electrolyte membrane produced from the polymer electrolyte composition of the present invention exhibits excellent resistance to mechanical deterioration caused by the swelling shrinkage that accompanies repeated starting and stopping of the fuel cell. Hence, when the polymer electrolyte composition of the present invention is used for producing a polymer electrolyte membrane for a fuel cell, a polymer electrolyte membrane that exhibits a practically applicable level of electric power generation performance can be realized, and the polymer electrolyte membrane displays a level of flexibility that enables stable long-term operation of the fuel cell.

By using an anion exchange resin obtained by replacing the N-methylimidazole used in example 1 with an N-substituted imidazole, i.e., N-normal-butylimidazole, N-ethylimidazole, an N-substituted imidazole, or 1,2-dimethylimidazole, an N-substituted pyrrolidine, i.e., N-methylpyrrolidine or N-ethylpyrrolidine, or an N-substituted piperidine, i.e., N-methylpiperidine or N-ethylpiperidine, and using this anion exchange resin instead of the anion exchange resin 1, a polymer electrolyte membrane is obtained that exhibits a substantially reduced elastic modulus while maintaining a high proton conductivity.

Example 3

A polymer electrolyte membrane 2 in combination with the lithium salt type cation exchange resin 1 is obtained by using the same method as example 2 while replacing the anion exchange electrolyte resin 1 used in Example 2 with a polymer having the following imidazolium group (anion exchange resin 2). This polymers electrolyte membrane 2 will exhibit a substantially reduced elastic modulus while maintaining a satisfactory proton conductivity.

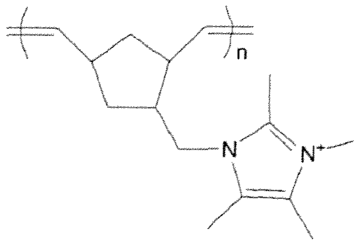

Example 4

A polymer electrolyte membrane 3 in combination with the lithium salt type cation exchange resin 1 is obtained by using the same method as example 2 while replacing the anion exchange resin 1 used in example 2 with a polymer having the following pyrrolidinium group (anion exchange resin 3). This polymer electrolyte membrane 3 will exhibit a substantially reduced elastic modulus while maintaining a satisfactory proton conductivity.

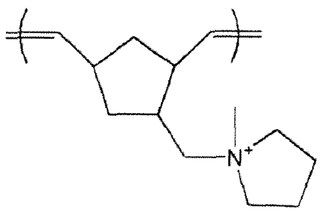

Example 5

A polymer electrolyte membranes 4 in combination with the lithium salt type cation exchange resin 1 is obtained by using the same method as examples 2 while replacing the anion exchange electrolyte resin 1 used in Example 2 with a polymer having the following piperidinium group (anion exchange resin 4). This polymer electrolyte membrane 4 will exhibit a substantially reduced elastic modulus while maintaining a satisfactory proton conductivity.

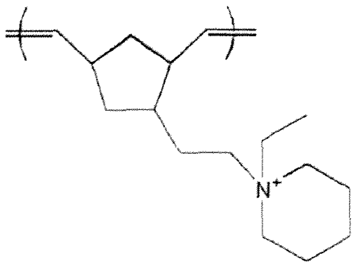

Example 6

A polymer electrolyte membrane 5 in combination with the lithium salt type cation exchange resin 1 is obtained by using the same method as example 2 while replacing the anion exchange electrolyte resin 1 used in example 2 with a polymer having the following pyridinium group (anion exchange resin 5). This polymer electrolyte membrane 5 will exhibit a substantially reduced elastic modulus while maintaining a satisfactory proton conductivity.

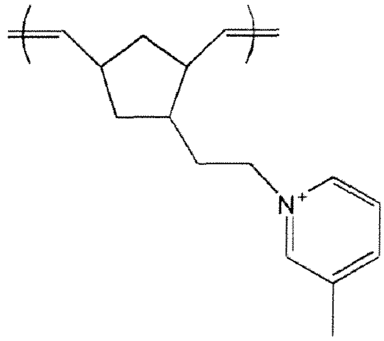

INDUSTRIAL APPLICABILITY

By using the polymer electrolyte composition of the present invention, a fuel cell member such as a polymer electrolyte membrane can be obtained that exhibits excellent flexibility, while maintaining a practically applicable level of proton conductivity. Further, a polymer electrolyte membrane produced from the polymer electrolyte composition of the present invention can be expected to provide a fuel cell having excellent long-term stability, and is therefore extremely useful industrially.

## Claims

**1.** A polymer electrolyte composition comprising a component (A) and a component (B) described below, wherein if the equivalent weight of cation exchange groups in the component (A) is termed Ic, and the equivalent weight of anion exchange groups in the component (B) is termed Ia, then the equivalent weight ratio represented by Ic/Ia is from 1 to 10,000:

(A) a cation exchange resin
(B) an anion exchange resin having a heterocyclic group containing a cationic nitrogen atom.

**2.** The polymer electrolyte composition according to claim 1, wherein the component (A) is a cation exchange resin having a sulfonic acid group.

**3.** The polymer electrolyte composition according to claim 1 or 2, wherein the component (A) is a cation exchange resin having an aromatic ring in the main chain.

**4.** The polymer electrolyte composition according to any one of claims 1 to 3, wherein the component (B) is an anion exchange resin having at least one heterocyclic group containing a cationic nitrogen atom selected from the group consisting of (B-1), (B-2), (B-3), (B-4) and (B-5) shown below:

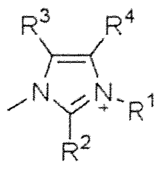
(B-1)

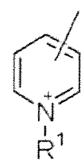
(B-2)

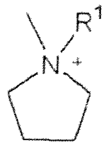
(B-3)

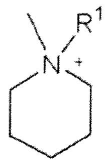
(B-4)

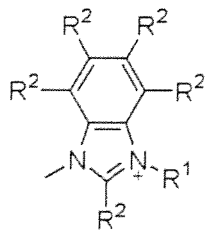
(B-5)

wherein $R^1$ represents an alkyl group of 1 to 20 carbon atoms, $R^2$ represents a hydrogen atom or an alkyl group of 1 to 20 carbon atoms, in a case where a single group has a plurality of $R^2$ groups, the plurality of $R^2$ groups may

be identical or different, $R^3$ and $R^4$, which may be identical or different, each represent a hydrogen atom or an alkyl group of 1 to 20 carbon atoms and may form a ring together with carbon atoms to which they are respectively bonded.

**5.** The polymer electrolyte composition according to any one of claims 1 to 4, wherein the amount of the component (B) is from 0.1 to 30 parts by weight relative to 100 parts by weight of the component (A).

**6.** The polymer electrolyte composition according to any one of claims 1 to 5 further comprising a solvent.

**7.** The polymer electrolyte composition according to any one of claims 1 to 6 further comprising a catalyst component.

**8.** A polymer electrolyte membrane prepared from the polymer electrolyte composition according to any one of claims 1 to 6.

**9.** A catalyst layer prepared from the polymer electrolyte composition according to claim 7.

**10.** A membrane-electrode assembly comprising the polymer electrolyte membrane according to claim 8 or the catalyst layer according to claim 9.

**11.** A solid polymer fuel cell comprising the membrane-electrode assembly according to claim 10.

**12.** An anion exchange resin comprising a structural unit represented by formula (2):

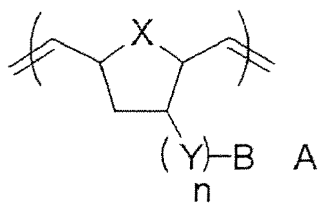

(2)

wherein B represents a heterocyclic group containing a cationic nitrogen atom, Y represents an alkylene group that may have a substituent or an arylene group that may have a substituent, n represents an integer of 0 to 10, in a case where n is 2 or greater, the plurality of Y groups may be identical or different, X represents a methylene group or an oxygen atom, and A represents an anion that is electrostatically equivalent to B.

**INTERNATIONAL SEARCH REPORT**

International application No.
PCT/JP2009/056849

A. CLASSIFICATION OF SUBJECT MATTER
*C08L101/02*(2006.01)i, *C08G61/06*(2006.01)i, *C08J5/22*(2006.01)i, *H01B1/06*(2006.01)i, *H01M4/86*(2006.01)i, *H01M8/02*(2006.01)i, *H01M8/10*(2006.01)i

According to International Patent Classification (IPC) or to both national classification and IPC

B. FIELDS SEARCHED

Minimum documentation searched (classification system followed by classification symbols)
C08L101/02, C08G61/06, C08J5/22, H01B1/06, H01M4/86, H01M8/02, H01M8/10

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2009 |
| Kokai Jitsuyo Shinan Koho | 1971-2009 | Toroku Jitsuyo Shinan Koho | 1994-2009 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>A | JP 2001-160408 A (Asahi Glass Co., Ltd.),<br>12 June, 2001 (12.06.01),<br>Claims; Par. Nos. [0011], [0019]<br>(Family: none) | 1-5<br>6-12 |
| A | JP 2003-501516 A (Thomas Haring),<br>14 January, 2003 (14.01.03),<br>Claims<br>& US 2002/0094466 A1 & EP 1177247 A<br>& WO 2000/074827 A2 | 1-12 |
| A | JP 2003-96219 A (Asahi Glass Co., Ltd.),<br>03 April, 2003 (03.04.03),<br>Claims<br>(Family: none) | 1-12 |

☐ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 29 June, 2009 (29.06.09) | 07 July, 2009 (07.07.09) |

| Name and mailing address of the ISA/ | Authorized officer |
|---|---|
| Japanese Patent Office | |
| Facsimile No. | Telephone No. |

Form PCT/ISA/210 (second sheet) (April 2007)

**INTERNATIONAL SEARCH REPORT**

International application No.
PCT/JP2009/056849

**Box No. II Observations where certain claims were found unsearchable (Continuation of item 2 of first sheet)**

This international search report has not been established in respect of certain claims under Article 17(2)(a) for the following reasons:

1. ☐ Claims Nos.:
because they relate to subject matter not required to be searched by this Authority, namely:

2. ☐ Claims Nos.:
because they relate to parts of the international application that do not comply with the prescribed requirements to such an extent that no meaningful international search can be carried out, specifically:

3. ☐ Claims Nos.:
because they are dependent claims and are not drafted in accordance with the second and third sentences of Rule 6.4(a).

**Box No. III Observations where unity of invention is lacking (Continuation of item 3 of first sheet)**

This International Searching Authority found multiple inventions in this international application, as follows:

There must exist a special technical feature so linking a group of inventions of claims as to form a single general inventive concept in order that the group of inventions may satisfy the requirement of unity of invention. Although the group of inventions of claims 1-11 is linked by the technical feature defined in claim 1, it is obvious that the group of inventions of claims 1-11 and the invention of claim 12 are not linked by the technical feature of claim 1.

Consequently, there is no special technical feature so linking the group of inventions of claims 1-12 as to form a single general inventive concept.

(Continued to extra sheet)

1. ☐ As all required additional search fees were timely paid by the applicant, this international search report covers all searchable claims.

2. ☒ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest** the

☐ The additional search fees were accompanied by the applicant's protest and, where applicable, payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (April 2007)

**INTERNATIONAL SEARCH REPORT**

International application No. PCT/JP2009/056849

Continuation of Box No.III of continuation of first sheet(2)

Therefore, it is obvious that the group of inventions of claims 1-12 does not satisfy the requirement of unity of invention and includes two or more inventions.

Form PCT/ISA/210 (extra sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2003031232 A
- JP 2003113136 A
- JP 9102322 A
- US 4012303 A
- US 4605685 A
- JP 9110982 A
- JP 11116679 A
- JP 2001250567 A
- WO 2007043274 A


### Non-patent literature cited in the description


- *Eletrochimica Acta,* 2001, vol. 46, 1723
- *Macromolecules,* 2005, vol. 38, 2037
- *Journal of the American Chemical Society,* 2004, vol. 126, 10945
- **Grubbs, R.H.** Handbook of Metathesis. Wiley-VCH
- *J. Appl. Polym. Sci.,* 1974, vol. 18, 1969
- *Polymer Prep.,* 2000, vol. 41 (1), 70
- *J. Electrochem. Soc., Electrochemical Science and Technology,* 1988, vol. 135 (9), 2209
- Shin Jikken Kagaku Koza. Kobunshi Kagaku. Maruzen Co., Ltd, vol. 19, 992